# EUROPÄISCHE PATENTSCHRIFT

(11) **EP 1 095 534 B1**
(45) Veröffentlichungstag und Bekanntmachung des Hinweises auf die Patenterteilung: **31.05.2006**
(21) Anmeldenummer: 99945885.4
(22) Anmeldetag: 02.07.1999
(51) Int. Cl.: H04Q 7/38

(54) **KOMMUNIKATIONSSYSTEM UND EIN HIERFÜR GEEIGNETES VERFAHREN ZUM BETREIBEN EINES KOMMUNIKATIONSSYSTEMS**
COMMUNICATION SYSTEM AND SUITABLE METHOD FOR OPERATING A COMMUNICATION SYSTEM
SYSTEME DE TELECOMMUNICATIONS ET PROCEDE APPROPRIE PERMETTANT DE FAIRE FONCTIONNER UN SYSTEME DE TELECOMMUNICATIONS

(30) Priorität: 03.07.1998 DE 19829797
(43) Veröffentlichungstag der Anmeldung: 02.05.2001
(73) Patentinhaber: Viag Interkom GmbH & Co., 80687 München (DE)
(72) Erfinder: ODORFER, Thomas, D-80687 München (DE); LORD, Phil, D-80687 München (DE)
(74) Vertreter: Lorenz, Eduard
(86) Internationale Anmeldenummer: PCT/DE1999/002034
(87) Internationale Veröffentlichungsnummer: WO 2000/002402

(56) Entgegenhaltungen:
- WO-A-92/19078
- WO-A-98/10614
- WO-A-99/55107

## Beschreibung

Die folgende Erfindung betrifft ein Kommunikationssystem, insbesondere für ein mobiles Telefonsystem, gemäß dem Oberbegriff des Anspruchs 1 und ein Verfahren zum Betreiben eines Kommunikationssystems gemäß dem Oberbegriff des Anspruchs 7.

Ein Kommunikationssystem gemäß dem Oberbegriff des Anspruchs 1 und ein Verfahren zum Betreiben eines Kommunikationssystems gemäß dem Oberbegriff des Anspruchs 7 ist aus der Druckschrift WO-A-98/10614 bekannt.

Der wirtschaftliche Erfolg von Betreiber bzw. Anbieter von Kommunikationssystemen - welche im folgenden mit Vermittlungseinheit allgemein gekennzeichnet werden - hängt insbesondere davon ab, ob sie beispielsweise in dem zu beabsichtigenden, beispielsweise durch Landesgrenzen abgegrenzten Gebiet eine vollständige Abdeckung für deren Abonnenten, welche beispielsweise eine stationäre bzw. mobile Telefoneinheit - im folgenden Nutzereinheit genannt - verwenden wollen, anbieten können. Für Vermittlungseinheiten, die nachträglich einen Marktanteil in einem bereits von Mitkonkurrenten (erste Vermittlungseinheit) abgedeckten Gebietes erwerben möchten, stellt sich das Problem, dass diese Mitkonkurrenten nicht gewillt sind, durch Vereinbarungen - sogenannten Roaming-Abkommen - eine gemeinsame Nutzung des bereits durch den Mitkonkurrenten abgedeckten Gebiet zu ermöglichen. Um eine derartige nationale Abdeckung erreichen zu können, haben sich für nachträglich in den Wettbewerb einsteigende bzw. lokal operierende Vermittlungseinheiten (zweite Vermittlungseinheit) allgemein zwei Alternativen entwickelt, die unter den Betriff "National roaming" und "Indirect roaming" bekannt sind.

Beim "National roaming" werden zwischen zwei innerhalb einer Landesgrenze operierenden Vermittlungseinheiten Verträge geschlossen, die entweder einem der Vertragspartner die Nutzung des Netzes des anderen Vertragspartners erlauben (Uniliteral case) oder beiden Vertragspartnern das Recht der Nutzung des anderen an den Vertragspartner angeschlossenen Netzwerks gestattet.

Demgegenüber werden beim "Indirect roaming" Vereinbarungen zwischen zwei Vermittlungseinheiten verschiedener Länder geschlossen, wobei diejenige Vermittlungseinheit (zweite Vermittlungseinheit) innerhalb der Landesgrenze, die auf der Suche nach einem Vertragspartner außerhalb der Landesgrenze ist, über diesen Vertragspartner (dritte Vermittlungseinheit) die Möglichkeit gegeben wird, eine Nutzung des Gebietes innerhalb der Landesgrenzen zu erwerben, welches aufgrund nicht abzuschließender nationaler Vereinbarung der zweiten Vermittlungseinheit nicht zur Verfügung stehen würde. Beim "Indirect roaming" werden somit keine Vereinbarungen zwischen innerhalb von Landesgrenzen befindlichen bzw. nationalen Vermittlungseinheiten notwendig.

Um dem Nutzer, dem aufgrund der obengenannten Abkommen ("National roaming" oder "Indirect roaming") die Möglichkeit einer vergrößerten Kommunikationsvermittelung gegeben wird, einen attraktiven bzw. einen von ihm bereits akzeptierten Komfort oder Service bereitstellen zu können, ist es notwendig, dass dem Nutzer (subscriber) bei der Nutzung des dam anderen Vertragspartner, d. h. erste bzw. dritte Vermittlungseinheit, angeschlossenen Kommunikationsnetz die gleiche Funktionalität und Serviceleistung zur Verfügung gestellt wird, als wenn er bereits das von ihm akzeptierte, beispielsweise durch die zweite Vermittlungseinheit bereitgestellte Kommunikationsnetz benutzen würde.

Um diese Anforderung erfüllen zu können, wurde beispielsweise gemäß WO 98/10614 vorgeschlagen, auf dem für die Nutzereinheit vorgesehenen Teilnehmerkenndatenmodul (subscriber identity modul; SIM-Karte) jeweils entsprechende Teilnehmerkenndaten (international mobile subscriber identities, IMSI) mit entsprechenden eigenen Profilen auf mehreren, unterschiedlichen Teilnehmerkenndatenmodulen zu versehen. In diesem Fall mußte der Nutzer bzw. Abonnent, wenn er von einem Gebiet der einen Vermittlungseinheit zu einem anderen Gebiet der anderen Vermittlungseinheit wechselt, ebenfalls das entsprechende Teilnehmerkenndatenmodul wechseln, was allgemein als "Chip roaming" bekannt ist und welches im alltäglichen Gebrauch für "Inderect roaming"-Zwecke ungeeignet war.

Um das Mitführen mehrerer SIM-Karten zu vermeiden, wurde gemäß der WO 92/19078 vorgeschlagen, eine SIM-Karte mit zwei entsprechenden Teilnehmerkenndaten (IMSIs) zu versehen, welche je nach Gebiet und Nutzung der Vermittlungseinheit durch Drehen der SIM-Karte um 180° die Nutzung zweier unterschiedlicher Vermittlungseinheiten ermöglicht. Dieses bekannte Verfahren hat für den Abonnenten weiterhin zur Folge, dass beispielsweise bei einem Wechsel zwischen dem besuchten Kommunikationsnetz der einen Vermittlungseinheit und dem Kommunikationsnetz der anderen Vermittlungseinheit, beispielsweise Heim-Funknetz, ein physikalisches Herausziehen, Drehen und Einführen der SIM-Karte durchgeführt werden muss. Auch dies bietet dem Abonnenten einen nur unzureichenden Komfort an und schränkt die Handhabung generell ein.

Um diese Nachteile zu vermeiden, wird bereits ebenfalls in der WO 98/10614 vorgeschlagen, ein spezielles Programm in der Nutereinheit und in der entsprechenden Teilnehmerdatei (home location register HLR) vorzusehen. Mit diesem fest zu installierenden Programm werden aber die Nachteile bzw. Einschränkungen in Kauf genommen, dass lediglich eine spezielle, dafür angepaßte Nutzereinheit dieses Programm aufweist, und sich somit von herkömmlichen Nutzereinheiten deutlich unterscheidet, und dieses bekannte Verfahren lediglich als halbautomatisch anzusehen ist. Diese Installation des Programms sowohl in der Nutzereinheit als auch in der entsprechenden Teilnehmerdatei ist allerdings für den Anbieter bzw. für die Vermittlungseinheit uninteressant, da der wirtschaftliche Erfolg der Vermittlungseinheit mit der Entscheidung des Verbrauchers zusammenhängt, für welche Nutzung des von der Vermittlungseinheit eingeschlossenen Gebietes er sich entscheidet, wobei diese Entscheidung des Verbrauchers auch durch die Angebotspalette der Vermittlungseinheit an unterschiedliche Nutzereinheiten beeinflußt wird, welche zusammen mit einer Lizenz der Vermittlungseinheit verkauft werden.

Es ist deshalb Aufgabe der vorliegenden Erfindung, ein Kommunikationssystem und ein Verfahren bereitzustellen, welche die obengenannten Nachteile verhindert und insbesondere welche die Möglichkeit schaffen, ein ungestörtes Wechseln zwischen den unterschiedlichen Vermittlungseinheiten zugehörigen Gebieten zu gewährleisten, aber dennoch den gleichen Service der bei einem Wechsel in Anspruch zu nehmenden, einzelnen Anbieter bzw. Vermittlungseinheiten bereitstellen zu können. Die Aufgabe der vorliegenden Erfindung besteht insbesondere darin, einen Wechsel zwischen den unterschiedlichen Vermittlungseinheiten zu vereinfachen.

Diese Aufgaben werden vorrichtungstechnisch mit den Merkmalen des Anspruchs 1 und verfahrenstechnisch mit den Merkmalen des Anspruchs 7 gelöst.

Erfindungsgemäß werden bei dem Kommunikationssystem die einer dritten Vermittlungseinheit zugeordneten, dritten Teilnehmerkenndaten und die einer zweiten Vermittlungseinheit zugeordneten, zweiten Teilnehmerkenndaten dem zweiten Teilnehmerkenndatenmodul zugewiesen, so dass je nach möglichem Verbindungsaufbau eine Gesamtabdeckung der jeweiligen, zu den zweiten Teilnehmerkenndaten und dritten Teilnehmerkenndaten zugehörigen Vermittlungseinheiten möglich ist, wobei die dritten Teilnehmerkenndaten und die zweiten Teilnehmerkenndaten ein gemeinsames Profil enthalten, um für den Teilnehmer bzw. für den Abonnenten den für ihn erforderlichen und bekannten Service bereitzustellen. Mit dieser erfindungsgemäßen Anordnung bzw. Festlegung auf dem zweiten Teilnehmerkenndatenmodul wird gewährleistet, dass die jeweils auf die einzelnen Vermittlungseinheiten abgestimmten Teilnehmerkenndaten den Zugang zu den entsprechenden, den Vermittlungseinheiten zugeordneten und ggfs. durch Roaming-Abkommen erweiterten Gebieten ermöglicht, gleichzeitig aber Grundeinstellungen, welche im Profil der Teilnehmerkenndaten niedergeschrieben sind und an die sich der Abonnent bzw. Nutzer gewöhnt hat sowohl von der dritten Teilnehmerkenndaten zugeordneten Vermittlungseinheit als auch von der zweiten Teilnehmerkenndaten zugeordneten Vermittlungseinheit in Anspruch genommen werden können. Mit dieser speziellen Anordnung auf dem Teilnehmerkenndatenmodul wird gewährleistet, dass ein mechanisches Wechseln bzw. ein Austauschen des Teilnehmerkenndatenmoduls wie im herkömmlichen Fall nicht erforderlich ist.

Es besteht somit die Möglichkeit, Abonnenten einer zweiten Vermittlungseinheit über die Einbeziehung einer dritten Vermittlungseinheit, die ein sogenanntes Roaming-Abkommen mit einer ersten Vermittlungseinheit abgeschlossen haben, einen Zugang zu einem Gebiet zu schaffen, welches kein "Roaming-Abkommen" mit der zweiten Vermittlungseinheit geschlossen hat. Damit wird einem Betreiber bzw. einer Vermittlungseinheit, welche sich noch etablieren und Marktanteile erwerben möchte und die noch keine oder wenige Roaming-Abkommen hat, ermöglicht, seinen Abonnenten einen Zugang zu anderen Netzen anzubieten, welche eine Vielzahl von Roaming-Abkommen abgeschlossen haben und somit auch eine Abdekkung von Gebieten ermöglicht, die weder unmittelbar zu der zweiten Vermittlungseinheit noch der dritten Vermittlungseinheit gehören, und wo beispielsweise ein Roaming-Abkommen zwischen einer ersten und einer zweiten Vermittlungseinheit aus verschiedenen Gründen nicht zustande kommt.

Das erfinderische Konzept sowohl des Kommunikationssystems als auch des hierfür geeigneten Verfahrens basiert lediglich auf einer direkten Eintragung in der SIM-Karte und benötigt somit weder eine Abänderung in der Nutzereinheit noch eine spezielle Integration einer Software bzw. Programms in der Nutzereinheit oder in der Teilnehmerdatei.

Erfindungsgemäß ist weiterhin vorgesehen, dass eine erste Schaltereinheit angeordnet ist, welche von den zweiten Teilnehmerkenndaten zu den dritten Teilnehmerkenndaten umschaltet, wenn die zweite Nutzereinheit das zweite Gebiet verläßt und in das erste Gebiet überwechselt, wobei jeder Vermittlungseinheit eine eigene PIN-Nummer zugeordnet ist, die sich gegenüber der PIN-Nummer der ersten Vermittlungseinheit um eine weitere Kennzahl unterscheidet und von der ersten Schaltereinheit erkannt wird. Die Schaltereinheit schaltet von den zweiten Teilnehmerkenndaten zu den dritten Teilnehmerkenndaten um, wenn die Nutzereinheit das zweite Gebiet verläßt und in das erste Gebiet überwechselt. Dem Abonnenten stehen somit erfindungsgemäß die gleichen Serviceeinheiten bzw. -leistungen zur Verfügung wie bei der zweiten Vermittlungseinheit.

Der Abonnent geniest somit weiterhin den für ihn bereits bekannten und speziell ausgewählten Komfort der zweiten Vermittlungseinheit. Diese erste Schaltereinheit kann vorzugsweise als manueller Schalter ausgestaltet sein und zwar dergestalt, dass nach Verlassen des der zweiten Vermittlungseinheit zugeordneten Gebietes der Abonnent eine spezielle Kennungsnummer (PIN1) eingeben muss, welche dann die entsprechenden Teilnehmerkenndaten aus dem Teilnehmerkenndatenmodul entnimmt. Beispielsweise können die jeweils zu den einzelnen Vermittlungseinheiten zugeordneten PIN-Nummem, welche dem Abonnenten mitgeteilt werden, lediglich durch Hinzufügen einer fest eingestellten Zahl, beispielsweise 1, zwischen den Teilnehmerkenndaten unterschiedlicher Vermittlungseinheiten unterschieden werden, welche beispielsweise der PIN-Nummer für die erste Vermittlungseinheit hinzugefügt wird. Durch dieses Hinzufügen an die bzw. Abändern einer herkömmlichen PIN-Nummer wird erreicht, dass die ausgewählte Vermittlungseinheit aufgrund der Länge der PIN-Nummer erkannt werden kann. Dem Abonnenten bleibt weiterhin die Möglichkeit, die jeweiligen PIN-Nummern zu verändem, jedoch nicht die der PIN-Nummer hinzugefügten Zahl. Um die Handhabung zu vereinfachen, wird bei Änderung der PIN-Nummer einer Vermittlungseinheit auch die jeweils anderen PIN-Nummern der anderen Vermittlungseinheit abgeändert, bis auf die hinzugefügte Zahl. Auf diese Weise wird der Abonnent nicht genötigt, sich unterschiedliche, den jeweiligen ersten, zweiten bzw. dritten Vermittlungseinheiten zugehörigen PIN-Nummern zu merken.

Weitere vorteilhafte Ausgestaltungen der Erfindung sind Gegenstand der abhängigen Ansprüche.

Ist gemäß Anspruch 2 das zweite Gebiet ein Teilgebiet des ersten Gebietes und/oder des dritten Gebietes, wobei das dritte Gebiet außerhalb des ersten Gebietes liegt, wird insbesondere die Zugangsmöglichkeit der Abonnenten der zweiten Vermittlungseinheit dahingehend erweitert, die zu keinem nationalen Roaming-Abkommen mit der ersten Vermittlungseinheit gekommen sind, welche beispielsweise bereits die Gesamtabdeckung innerhalb nationaler Landesgrenzen für sich beanspruchen kann.

Liegt in diesem Fall das dritte Gebiet zusätzlich außerhalb des ersten Gebietes, so wird beispielsweise die nationale Gesamtabdeckung aufgrund der ersten Vermittlungseinheit über das sogenannten "international roaming" ermöglicht, wenn die erste Vermittlungseinheit mit der dritten Vermittlungseinheit ein Roaming-Abkommen geschlossen hat.

Wird gemäß Anspruch 3 eine zweite Schaltereinheit vorgesehen, welche von den dritten Teilnehmerkenndaten zu den Teilnehmerkenndaten umschaltet, wenn die Nutzereinheit von dem ersten Gebiet in das zweite Gebiet zurückkehrt, dann wird aufgrund dieser Ausführungsform ein sogenanntes automatisches Umschalten zur Verfügung gestellt, welches den Nutzungskomfort für den Abonnenten weiter verbessert. Dieser zweite Schalter kann beispielsweise ein Trigger bzw. Timer sein, welcher aufgrund einer Information auf der Nutzereinheit eine Information an die SIM-Karte bzw. zweiten Teilnehmerkenndatenmodul übermittelt, so dass das Teilnehmerkenndatenmodul beispielsweise von den dritten Teilnehmerkenndaten zu den zweiten Teilnehmerkenndaten zurückschaltet. Dieser Trigger bzw. Timer kann beispielsweise eine Vielzahl von Aktionen auslösen, beispielsweise ein Aktualisieren bzw. Ändern der Datei auf dem Teilnehmerkenndatenmodul (elementary file, EF), ein Setzen eines dem Timer zugeordneten zeitlichen Abfragemodus oder ein Bereitstellen einer lokalen Information.

Wird gemäß Anspruch 4 die zweite Nutzereinheit mit einem Abfragealgorythmus mit Suchmodus ausgestattet, welche periodische bzw. nach bestimmten Zeitabläufen untersucht, ob sich die zweite Nutzereinheit im zweiten Gebiet befindet, so wird sichergestellt, dass auch bei nur kurzzeitigem Verlassen des Gebietes eine Umschaltung auf die zweite Vermittlungseinheit vorgenommen wird, sobald der Abonnent in das zweite Gebiet zurückkehrt. Je nach Kapazität der Nutzereinheit kann die Häufigkeit der Abfragezyklen eingestellt werden. Ein zu häufiges Abfragen könnte insofern störend sein, wenn die Suchzeiten für den Abfragemodus aufgrund der zu geringen Dimensionierung der Nutereinheit zu lang werden.

Wird gemäß Anspruch 5 der Schaltungszustand der zweiten Schalteinrichtung von der zweiten Nutzereinheit dargestellt, so wird es dem Abonnenten anheim gestellt, solange zu warten, bis das zweite Gebiet wieder erreicht wird oder ob er sich in die dritte Vermittlungseinheit einwählen soll.

Wird gemäß Anspruch 6 die erste, die zweite und/oder die dritte Nutzereinheit in Form eines mobilen Telefons ausgebildet, so wird das Kommunikationssystem bzw. das hierfür geeignete Verfahren dazu am besten genutzt.

Weitergehende vorteilhafte Ausgestaltungen der Erfindung sind Gegenstand der übrigen Unteransprüche.

Die vorliegende Erfindung betrifft ferner ein Verfahren gemäß des 7 zum Betreiben eines Kommunikationssystems, vorzugsweise für ein mobiles Telefonsystem und insbesondere nach einem der Ansprüche 1 bis 6. Erfindungsgemäß ist vorgesehen, dass die dritten Teilnehmerkenndaten und die zweiten Teilnehmerkenndaten ein gemeinsames Profil enthalten, um für den Teilnehmer den für ihn erforderlichen und ihm bekannten Service bereit zu stellen. Erfindungsgemäß ist weiter vorgesehen, dass von den zweiten Teilnehmerkenndaten zu den dritten Teilnehmerkenndaten umgeschaltet wird, wenn die Nutzereinheit das zweite Gebiet verläßt und in das erste Gebiet überwechselt, wobei das Umschalten mit Eingabe und Erkennung einer für die jeweiligen Vermittlungseinheiten eigenen, durch den Teilnehmer einzugebenden PIN-Nummer erfolgt und sich die PIN-Nummer der jeweiligen Vermittlungseinheit gegenüber der PIN-Nummer der ersten Vermittlungseinheit um eine weitere Kennzahl unterscheidet.

Weitere vorteilhafte Ausgestaltungen des Verfahrens sind Gegenstand der Unteransprüche.

Es kann vorgesehen sein, dass ein Umschalten durch eine zweite Schaltereinheit vorgesehen ist, welche von den dritten Teilnehmerkenndaten zu den zweiten Teilnehmerkenndaten umschaltet, wenn die Nutzereinheit von dem ersten Gebiet in das zweite Gebiet zurückkehrt.

Besonders vorteilhaft ist es, wenn ein Abfragealgorythmus mit Suchmodus periodisch überprüft, ob sich die zweite Nutzereinheit in dem zweiten Gebiet befindet.

Weiterhin kann vorgesehen sein, dass das zweite Gebiet ein Teilgebiet des ersten Gebietes ist und/oder das dritte Gebiet außerhalb des ersten Gebietes liegt.

Unter Bezugnahme auf die nachfolgende Figur wird eine besonders vorteilhafte Ausgestaltung näher erläutert.

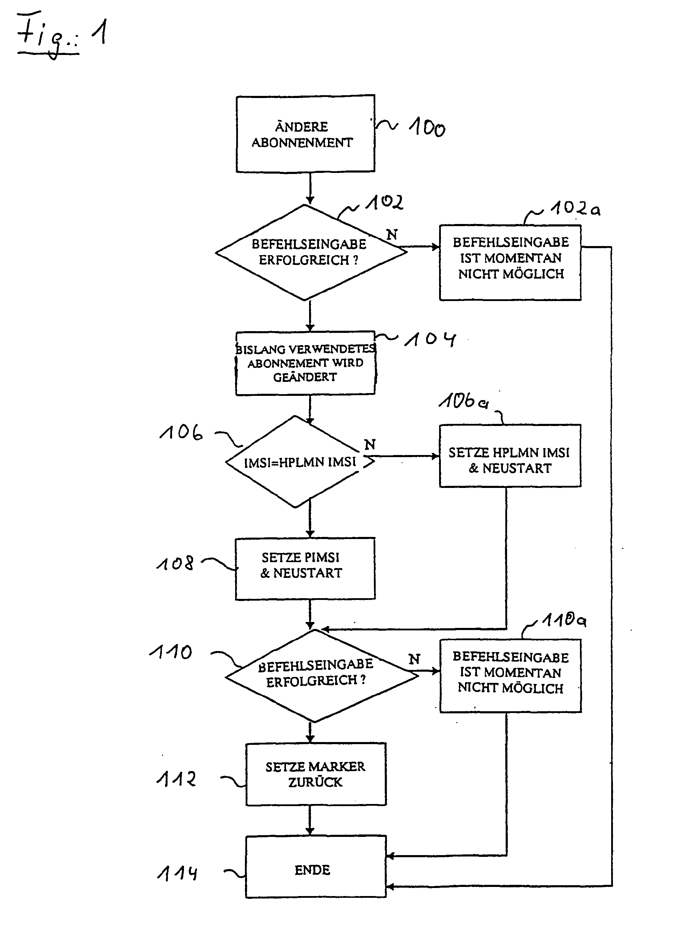

Mit Figur 1 wird ein Umschalten im Rahmen eines sogenannten "easy-switching" mit Direktanzeige auf der zweiten Nutzereinheit vorgestellt.

Zur Verdeutlichung dieser Ausgestaltung sollen im folgenden das durch Anzeige unterstütztes bzw. automatisches, durch die Erfindung vereinfachtes Wechseln der Vermitttungseinheiten anhand des Flußdiagramms dargestellt werden.

Gemäß Fig. 1 wird beispielsweise beim Verlassen des zweiten Gebietes dem Abonnenten angezeigt, dass nunmehr eine Änderung des Abonnements notwendig ist, um kommunizieren zu können. Hierzu wird gemäß Schritt 100 angezeigt "Ändere Abonnement", wobei die Anzeige selbst individuell beispielsweise von Vermittlungseinheit zu Vermittlungseinheit geändert werden kann. Im Schritt 102 wird abgefragt, ob eine Befehlseingabe erfolgreich erfolgt ist. Falls Nein wird im Schritt 102a der Text angezeigt "Diese Befehlseingabe ist momentan nicht möglich" und schreitet direkt zu Schritt 114 "Ende". Wird der Schritt 102 bejaht, dann erscheint gemäß Schritt 104 ein Anzeigetext mit "Bislang verwendetes Abonnement wird geändert" und schreitet zu Schritt 106 fort. Im Schritt 106 wird geprüft, welche Teilnehmerkenndaten zugänglich sind. Liegen beispielsweise die zweiten Teilnehmerkenndaten als Heim-Teilnehmerkenndaten (HPLMN) nicht vor, wird zu Schritt 106a fortgefahren und dort die Heim-Teilnehmerkenndaten als momentan aktive zweite Teilnehmerkenndaten gesetzt und ein Neustart durchgeführt. Wird Schritt 106 verneint, werden im Schritt 108 die dritten Teilnehmerkenndaten als Partner-Teilnehmerkenndaten (PPLMN) gesetzt und ein Neustart durchgeführt. Im Schritt 110 wird überprüft, ob die Befehlseingabe erfolgreich durchgeführt wurde. Wird Schritt 110 verneint erscheint ein Anzeigetext gemäß Schritt 110a der dem Nutzer mitteilt dass die Befehlseingabe momentan nicht möglich ist und schreitet zum Ende. Wird Schritt 110 bejaht wird der Marker im Schritt 112, welcher zu Beginn anzeigte, dass das zweite Gebiet verlassen wird, zurückgesetzt und bei Schritt 112 beendet.

Eine Abänderung des Profils der Teilnehmerkenndaten wird somit nicht erforderlich und der Abonnent kann den kompletten Service seiner Heim-Vermittlungseinheit, ungehindert in Anspruch nehmen.

## Patentansprüche

1. Kommunikationssystem für ein mobiles Telefonsystem mit
zumindest einer ersten Vermittlungseinheit (V-1), welche eine erstes Gebiet von einer ersten, durch ein erstes Teilnehmerkenndatenmodul (SIM-1) gesteuerten Nutzereinheit (MS-1) mit ersten Teilnehmerkenndaten (IMSI-1) bedient, und
zumindest einer zweiten Vermittlungseinheit (V-VI), welche ein zweites Gebiet von einer zweiten, durch ein zweites Teilnehmerkenndatenmodul (SIM-VI) gesteuerten Nutzereinheit (MS-VI) mit zweien Teilnehmerkenndaten (IMSI-VI) bedient,
einer dritten Vermittlungseinheit (V-3), welche ein drittes Gebiet von dritten, durch ein drittes Teilnehmerkenndatenmodul (SIM-3) gesteuerte Nutzereinheit (MS-3) mit dritten Teilnehmerkenndaten (IMSI-3) bedient, wobei
die erste Vermittlungseinheit (V-1) und die dritte Vermittlungseinheit (V-3) zur Nutzung eines Gesamtgebietes bestehend aus dem ersten Gebiet und dem dritten Gebiet miteinander verbunden sind und zumindest
die zweite Vermittlungseinheit (V-VI) mit der dritten Vermittlungseinheit (V-3) zur Nutzung eines Gesamtgebietes bestehend aus dem zweiten Gebiet und dem dritten Gebiet verbunden ist,
wobei die dritten Teilnehmerkenndaten (IMSI-3) und die zweiten Teilnehmerkenndaten (IMSI-VI) dem zweiten Teilnehmerkenndatenmodul (SIM-VI) zugewiesen sind,
**dadurch gekennzeichnet,**
**dass** die dritten Teilnehmerkenndaten (IMSI-3) und die zweiten Teilnehmerkenndaten (ISMI-VI) ein gemeinsames Profil enthalten, um für den Teilnehmer den für ihn erforderlichen und bekannten Service bereit zu stellen, und
**dass** eine erste Schaltereinheit vorgesehen ist, die derart ausgestaltet ist, dass sie von den zweiten Teilnehmerkenndaten (ISMI-VI) zu den dritten Teilnehmerkenndaten (IMSI-3) umschaltet, wenn die zweite Nutzereinheit (MS-VI) das zweite Gebiet verläßt und in das erste Gebiet überwechselt, wobei jeder Vermittlungseinheit eine eigene PIN-Nummer zugeordnet ist, die sich gegenüber der PIN-Nummer der ersten Vermittlungseinheit (V-1) um eine weitere Kennzahl unterscheidet, und wobei die erste Schaltereinheit derart ausgeführt ist, dass sie die Teilnehmerkenndaten umschaltet, nachdem sie die vom Teilnehmer eingegebenen PIN-Nummern der Vermittlungseinheiten erkennt.

2. System nach Anspruch 1, **dadurch gekennzeichnet, dass** das zweite Gebiet ein Teilgebiet des ersten Gebietes ist und/oder das dritte Gebiet außerhalb des ersten Gebietes liegt.

3. System nach einem der Ansprüche 1 bis 2, **dadurch gekennzeichnet, dass** eine zweite Schaltereinheit vorgesehen ist, welche von den dritten Teilnehmerkenndaten (IMSI-3) zu den zweiten Teilnehmerkenndaten (IMSI-VI) umschaltet, wenn die zweite Nutzereinheit (MS-VI) von dem ersten Gebiet in das zweite Teilnehmergebiet zurückkehrt.

4. System nach Anspruch 3, **dadurch gekennzeichnet, dass** die zweite Schaltereinrichtung in der zweiten Nutzereinheit (MS-VI) vorgesehen ist und ein Abfragealgorithmus mit Suchmodus enthält, welcher periodisch untersucht, ob sich die zweite Nutzereinheit (MS-VI) in dem zweiten Gebiet befindet.

5. System nach Anspruch 4, **dadurch gekennzeichnet, dass** der Schaltungszustand der zweiten Schaltereinrichtung von der zweiten Nutzereinheit (MS-VI) dargestellt wird.

6. System nach einem der Ansprüche 1 bis 5, **dadurch gekennzeichnet, dass** die erste, die zweite und/oder die dritte Nutzereinheit in Form eines mobilen Telefons ausgebildet ist.

7. Verfahren zum Betreiben eines Kommunikationssystems welches die Schritte aufweist:
a) Bereitstellen einer ersten Vermittlungseinheit (V-1), einer zweiten Vermittlungseinheit (V-VI) und einer dritten Vermittlungseinheit (V-3), welche jeweils ein erstes Gebiet mit ersten Teilnehmerkenndaten, ein zweites Teilnehmergebiet mit zweiten Teilnehmerkenndaten und ein drittes Gebiet mit dritten Teilnehmerkenndaten bedienen, wobei die dritten Teilnehmerkenndaten und die zweiten Teilnehmerkenndaten einem zweiten Teilnehmerkenndatenmodul zur Steuerung der Nutzereinheit zugewiesen sind,
b) Erstellen einer Verbindung zwischen der zweiten Vermittlungseinheit (VVI) mit der dritten Vermittlungseinheit (V-3) zur Nutzung eines Gesamtgebietes bestehend aus dem zweiten Gebiet und dem dritten Gebiet,
c) Erstellen einer Verbindung zwischen der ersten Vermittlungseinheit (V-1) und der dritten Vermittlungseinheit (V-3) zur Nutzung eines Gesamtgebietes bestehend aus dem ersten Gebiet und dem dritten Gebiet,
**dadurch gekennzeichnet**,
d) dass die dritten Teilnehmerkenndaten (IMSI-3) und die zweiten Teilnehmerkenndaten (IMSI-VI) ein gemeinsames Profil enthalten, um für den Teilnehmer den für ihn erforderlichen und bekannten Service bereit zu stellen und
e) Umschalten von den zweiten Teitnehmerkenndaten (IMSI-VI) zu den dritten Teilnehmerkenndaten (IMSI-3) durch eine erste Schaltereinheit, wenn die Nutzereinheit (MS-VI) das zweite Gebiet verläßt und in das erste Gebiet überwechselt, wobei das Umschalten mit Eingabe und nach der Erkennung einer für die jeweilige Vermittlungseinheit eigenen PIN-Nummer erfolgt, wobei die Eingabe der PIN-Nummer durch den Teilnehmer erfolgt und wobei sich die PIN-Nummer der jeweiligen Vermittlungseinheit gegenüber der PIN-Nummer der ersten Vermittlungseinheit (V-1) um eine weitere Kennzahl unterscheidet.

8. Verfahren nach Anspruch 7, **dadurch gekennzeichnet, dass** ein Umschalten durch eine zweite Schaltereinheit vorgesehen ist, welche von den dritten Teilnehmerkenndaten (IMSI-3) zu den zweiten Teilnehmerkenndaten (IMSI-VI) umschaltet, wenn die Nutzereinheit (MS-VI) von dem ersten Gebiet in das zweite Gebiet zurückkehrt.

9. Verfahren nach Anspruch 7 oder 8, **dadurch gekennzeichnet**, das ein Abfragealgorithmus mit Suchmodus periodisch überprüft, ob sich die zweite Nutzereinheit (MS-VI) in dem zweiten Gebiet befindet.

10. Verfahren nach einem der Ansprüche 7 bis 9, **dadurch gekennzeichnet, dass** das zweite Gebiet ein Teilgebiet des ersten Gebiets ist und/oder das dritte Gebiet außerhalb des ersten Gebiets liegt.

## Claims

1. Communication system for a mobile telephone system having
at least one first switching unit (V-1) which provides a first area of a first user unit (MS-1), controlled by a first subscriber identification data module (SIM-1), with first subscriber identification data (IMSI-1), and
at least one second switching unit (V-VI) which provides a second area of a second user unit (MS-VI), controlled by a second subscriber identification data module (SIM-VI), with second subscriber identification data (IMSI-VI),
a third switching unit (V-3) which provides a third area of a third user unit (MS-3), controlled by a third subscriber identification data module (SIM-3), with third subscriber identification data (IMSI-3), where
the first switching unit (V-1) and the third switching unit (V-3) are connected to one another in order to use a total area comprising the first area and the third area, and at least
the second switching unit (V-VI) is connected to the third switching unit (V-3) in order to use a total area comprising the second area and the third area,
with the third subscriber identification data (IMSI-3) and the second subscriber identification data (IMSI-VI) being associated with the second subscriber identification data module (SIM-VI),
**characterized**
**in that** the third subscriber identification data (IMSI-3) and the second subscriber identification data (IMSI-VI) contain a joint profile in order to provide the subscriber with the service which he requires and knows, and
**in that** a first switch unit is provided which is in a form such that it changes over from the second subscriber identification data (IMSI-VI) to the third subscriber identification data (IMSI-3) when the second user unit (MS-VI) leaves the second area and changes to the first area, where each switching unit has its own associated PIN number which differs from the PIN number of the first switching unit (V-1) by a further identification number, and where the first switch unit is designed such that it changes over the subscriber identification data after it has recognized the switching units' PIN numbers which have been input by the subscriber.

2. System according to Claim 1, **characterized in that** the second area is a subarea of the first area and/or the third area is situated outside the first area.

3. System according to either of Claims 1 and 2, **characterized in that** a second switch unit is provided which changes over from the third subscriber identification data (IMSI-3) to the second subscriber identification data (IMSI-VI) when the second user unit (MS-VI) returns from the first area to the second subscriber area.

4. System according to Claim 3, **characterized in that** the second switch device is provided in the second user unit (MS-VI) and contains an interrogation algorithm with a search mode which periodically examines whether the second user unit (MS-VI) is situated in the second area.

5. System according to Claim 4, **characterized in that** the circuit state of the second switch device is shown by the second user unit (MS-VI).

6. System according to one of Claims 1 to 5, **characterized in that** the first, the second and/or the third user unit is in the form of a mobile telephone.

7. Method for operating a communication system which has the following steps:
a) a first switching unit (V-1), a second switching unit (V-VI) and a third switching unit (V-3) are provided which respectively provide a first area with first subscriber identification data, a second subscriber area with second subscriber identification data and a third area with third subscriber identification data, where the third subscriber identification data and the second subscriber identification data are associated with a second subscriber identification data module for controlling the user unit,
b) a connection is set up between the second switching unit (V-VI) and the third switching unit (V-3) in order to use a total area comprising the second area and the third area,
c) a connection is set up between the first switching unit (V-1) and the third switching unit (V-3) in order to use a total area comprising the first area and the third area,
**characterized**
d) in that the third subscriber identification data (IMSI-3) and the second subscriber identification data (IMSI-VI) contain a joint profile in order to provide the subscriber with the service which he requires and knows, and
e) in that a first switch unit changes over from the second subscriber identification data (IMSI-VI) to the third subscriber identification data (IMSI-3) when the user unit (MS-VI) leaves the second area and changes to the first area, where the changeover is effected upon input and following recognition of a PIN number belonging to the respective switching unit, where the PIN number is input by the subscriber and where the PIN number of the respective switching unit differs from the PIN number of the first switching unit (V-1) by a further identification number.

8. Method according to Claim 7, **characterized in that** provision is made for changeover by a second switch unit, which changes over from the third subscriber identification data (IMSI-3) to the second subscriber identification data (IMSI-VI) when the user unit (MS-VI) returns from the first area to the second area.

9. Method according to Claim 7 or 8, **characterized in that** an interrogation algorithm with a search mode periodically checks whether the second user unit (MS-VI) is situated in the second area.

10. Method according to one of Claims 7 to 9, **characterized in that** the second area is a subarea of the first area and/or the third area is situated outside the first area.

## Revendications

1. Système de communication pour système téléphonique mobile, comportant
au moins une première unité d'opérateur (V-1) qui fournit à un premier secteur d'une première unité d'utilisateur (MS-1) contrôlée par un premier module d'état signalétique d'usager (SIM-1) un premier état signalétique d'usager (IMSI-1), et
au moins une deuxième unité d'opérateur (V-VI) qui fournit à un deuxième secteur d'une deuxième unité d'utilisateur (MS-VI) contrôlée par un deuxième module d'état signalétique d'usager (SIM-VI) un deuxième état signalétique d'usager (IMSI-VI),
une troisième unité d'opérateur (V-3) qui fournit à un troisième secteur d'une troisième unité d'utilisateur (MS-3) contrôlée par un troisième module d'état signalétique d'usager (SIM-3) un troisième état signalétique d'usager (IMSI-3), tandis que
la première unité d'opérateur (V-1) et la troisième unité d'opérateur (V-3) sont reliées entre elles pour utiliser un secteur global composé du premier secteur et du troisième secteur et au moins
la deuxième unité d'opérateur (V-VI) est reliée à la troisième unité d'opérateur (V-3) pour utiliser un secteur global composé du deuxième secteur et du troisième secteur,
le troisième état signalétique d'usager (IMSI-3) et le deuxième état signalétique d'usager (IMSI-VI) étant affectés au deuxième module d'état signalétique d'usager (SIM-VI),
**caractérisé en ce que**
le troisième état signalétique d'usager (IMSI-3) et le deuxième état signalétique d'usager (IMSI-VI) contiennent un profil commun afin de mettre à disposition de l'usager le service qu'il lui faut et qu'il connaît, et
qu'il est prévu une première unité de commutation qui est conçue de manière à commuter du deuxième état signalétique d'usager (IMSI-VI) vers le troisième état signalétique d'usager (IMSI-3) lorsque la deuxième unité d'utilisateur (MS-VI) quitte le deuxième secteur et passe dans le premier secteur, étant associé à chaque unité d'opérateur un numéro PIN propre qui se distingue par rapport au numéro PIN de la première unité d'opérateur (V-1) à raison d'un autre indicatif, et la première unité de commutation étant réalisée de manière à commuter l'état signalétique d'usager après avoir reconnu les numéros PIN saisis par l'usager des unités d'opérateur.

2. Système selon la revendication 1, **caractérisé en ce que** le deuxième secteur est un secteur partiel du premier secteur et/ou que le troisième secteur se trouve à l'extérieur du premier secteur.

3. Système selon l'une quelconque des revendications 1 à 2, **caractérisé en ce qu'**il est prévu une deuxième unité de commutation qui commute du troisième état signalétique d'usager (IMSI-3) vers le deuxième état signalétique d'usager (IMSI-VI) lorsque la deuxième unité d'utilisateur (MS-VI) revient du premier secteur vers le deuxième secteur d'usager.

4. Système selon la revendication 3, **caractérisé en ce que** le deuxième dispositif de commutation est prévu dans la deuxième unité d'utilisateur (MS-VI) et contient un algorithme d'interrogation à mode de recherche qui recherche périodiquement si la deuxième unité d'utilisateur (MS-VI) se trouve dans le deuxième secteur.

5. Système selon la revendication 4, **caractérisé en ce que** l'état des circuits du deuxième dispositif de commutation est représenté par la deuxième unité d'utilisateur (MS-VI).

6. Système selon l'une quelconque des revendications 1 à 5, **caractérisé en ce que** la première, la deuxième et/ou la troisième unité d'utilisateur sont réalisées sont forme d'un téléphone mobile.

7. Procédé permettant de faire fonctionner un système de communication présentant les étapes suivantes :
a) Mise à disposition d'une première unité d'opérateur (V-1), d'une deuxième unité d'opérateur (V-VI) et d'une troisième unité d'opérateur (V-3) qui fournissent respectivement à un premier secteur un premier état signalétique d'usager, à un deuxième secteur un deuxième état signalétique d'usager et à un troisième secteur un troisième état signalétique d'usager, le troisième état signalétique d'usager et le deuxième état signalétique d'usager étant affectés à un deuxième module d'état signalétique d'usager pour le contrôle de l'unité d'utilisateur,
b) établissement d'une liaison entre la deuxième unité d'opérateur (V-VI) et la troisième unité d'opérateur (V-3) pour utiliser un secteur global composé du deuxième secteur et du troisième secteur,
c) établissement d'une liaison entre la première unité d'opérateur (V-1) et la troisième unité d'opérateur (V-3) pour utiliser un secteur global composé du premier secteur et du troisième secteur,
**caractérisé en ce que**
d) le troisième état signalétique d'usager (IMSI-3) et le deuxième état signalétique d'usager (IMSI-VI) contiennent un profil commun afin de mettre à disposition de l'usager le service qu'il lui faut et qu'il connaît et
e) par une commutation du deuxième état signalétique d'usager (IMSI-VI) vers le troisième état signalétique d'usager (IMSI-3) au moyen d'une première unité de commutation lorsque l'unité d'utilisateur (MS-VI) quitte le deuxième secteur et passe dans le premier secteur, la commutation ayant lieu à la saisie et après reconnaissance d'un numéro PIN propre pour l'unité d'opérateur respective, la saisie du numéro PIN étant faite par l'usager et le numéro PIN de l'unité d'opérateur respective se distinguant par rapport au numéro PIN de la première unité d'opérateur (V-I) à raison d'un autre indicatif.

8. Procédé selon la revendication 7, **caractérisé en ce qu'**il est prévu une commutation par une deuxième unité de commutation, laquelle commutation permet de commuter du troisième état signalétique d'usager (IMSI-3) vers le deuxième état signalétique d'usager (IMSI-VI) lorsque l'unité d'utilisateur (MS-VI) revient du premier secteur vers le deuxième secteur.

9. Procédé selon la revendication 7 ou 8, **caractérisé en ce qu'**un algorithme d'interrogation à mode de recherche contrôle périodiquement si la deuxième unité d'utilisateur (MS-VI) se trouve dans le deuxième secteur.

10. Procédé selon l'une quelconque des revendications 7 à 9, **caractérisé en ce que** le deuxième secteur est un secteur partiel du premier secteur et/ou que le troisième secteur se trouve à l'extérieur du premier secteur.
